# EUROPEAN PATENT APPLICATION

(11) **EP 1 158 341 A2**
(43) Date of publication of application: **28.11.2001**
(21) Application number: 01201878.4
(22) Date of filing: 18.05.2001
(51) Int. Cl.: G02F 1/01, H04B 10/18, G02B 6/34, H04Q 3/52

(54) **Optical switch**

(30) Priority: 25.05.2000 GB 0012614
(71) Applicant: ROKE MANOR RESEARCH LIMITED, Romsey, Hampshire SO51 0ZN (GB)
(72) Inventor: Mansbridge, John, Stockbridge, Hampshire SO20 6QB (GB)
(74) Representative: Humphrey-Evans, Edward John

(57) **Abstract**

Described herein is an integrated optical device (400) having an input path (402) and an output path (420). A waveguide (430) including a Bragg grating is located in the output path (420). A plurality of control elements are located along the waveguide (430) for providing local adjustment of the Bragg grating to compensate for manufacturing errors. The control elements are conveniently thermo-optic elements, for example, resistive elements whose temperature can be changed by supplying current to them.

## Description

### Field of the Invention

The present invention relates to improvements in or relating to optical switching, and is more particularly, although not exclusively, concerned with high speed digital communication routers or switches.

### Background to the Invention

Our co-pending British patent application nos. 9930163.2 and 0009449.0 relate to a data compression method for converting packets of data at 10Gb/s to packets at 1.28Tb/s. The compressed packets are then time multiplexed onto the fibre optic backplane of a device such as an IP router or ATM switch. However, the architecture disclosed in the above mentioned patent applications requires that components are interconnected using optical fibre, which is both time consuming and adds to assembly costs.

Some of the most important elements of the optical backplane described in British patent application no. 0009449.0 are the fibre compressors and decompressors. The most convenient implementation of these devices is in the form of a Bragg dispersive grating. This type of device consists of a periodic spatial variation in the refractive index along the core of the optical fibre that is arranged to resonate with the wavelength of light in the fibre. At resonance, the light is strongly reflected. By changing the period of the variation, different wavelengths of light can be reflected from different parts of the grating. In this way, the time delay for light propagating through the device can he made to depend on the wavelength and thus the gratings become dispersive and can be employed to compress and decompress optical pulses.

These gratings are usually fabricated in a fibre that has its core doped so that UV light can be used to permanently alter the refractive index of the core. By exposing the core to a periodic pattern of UV light, a periodic variation in the refractive index can be permanently imposed on the core of the fibre. However, there are various manufacturing effects that make control of the grating behaviour difficult to define with the required accuracy, that is, if linear dispersion is required (time delay vs. wavelength can be plotted on a straight line), the manufacturing process can introduce errors that appear as a deviation from perfect linearity in a time delay vs. wavelength graph.

### Objects to the Invention

It is therefore an object of the present invention to provide an integrated optical system which generates considerable reductions in volume and manufacturing costs.

It is another object of the present invention to provide increased integration of components on an optical backplane.

### Statement of Invention

In accordance with a first aspect of the invention there is provided a planar dispersion compensation waveguide comprising a Bragg grating and a plurality of control elements, the control elements each being operable to adjust the refractive index of a section of the grating and control means, wherein the control means are operable to adjust the chirp properties of the waveguide.

In accordance with a second aspect of the invention there is provided an integrated optical device comprising:-
a plurality of electronic components;
a waveguide; and
a Bragg grating formed in the waveguide;
wherein the Bragg grating comprises a plurality of control elements, the control elements each being operable to adjust the refractive index of a section of the grating and control means, wherein the control means are operable to adjust the chirp properties of the waveguide.

The control elements can be selected from the group comprising: thermo-optic elements; electro-optic elements; magneto-optic elements; magneto-optic-non- magneto-strictive elements; piezo-electric elements.

In accordance with a further aspect of the invention, there is provided a method of operating a planar dispersion compensation waveguide comprising a Bragg grating and a plurality of control elements, the control elements each being operable to adjust the refractive index of a section of the grating and control means; the method comprising the steps of adjusting the refractive index of each of the sections of the grating whereby to adjust the chirp properties of the waveguide.

The present invention can provide, for example, a thousand or more individual control elements such as heating elements which are incorporated into a device including a Bragg grating whereby, inter alia, manufacturing variations can be accounted for. The currents required to enable the control elements to be activated for each control could be determined in advance using a calibration method and then stored in digital memory. When the device is powered the currents would be set according to the digital data stored on the device or externally. In this way, multiple sets of currents could be stored to enable the device characteristics, such as the value of the dispersion, to be altered when the device is in-place in a system. This would provide the advantage that the device would not need to be manufactured with very accurate parameters, as these could be selected by the system designer and programmed into the device.

### Brief Description of the Figures

For a better understanding of the present invention, reference will now be made, by way of example only, to the figures in the accompanying drawing sheets in which:-
Figure 1 is a schematic diagram of a router employing a data compression apparatus;
Figure 2 illustrates an integrated grating in accordance with the present invention; and,
Figure 3 illustrates an integrated optical device with all the optical backplane components associated with a single input/output port on a router.

### Detailed description of preferred Embodiment

Although the present invention will be described with reference to a router, it will readily be appreciated that it can be applied to other optical systems.

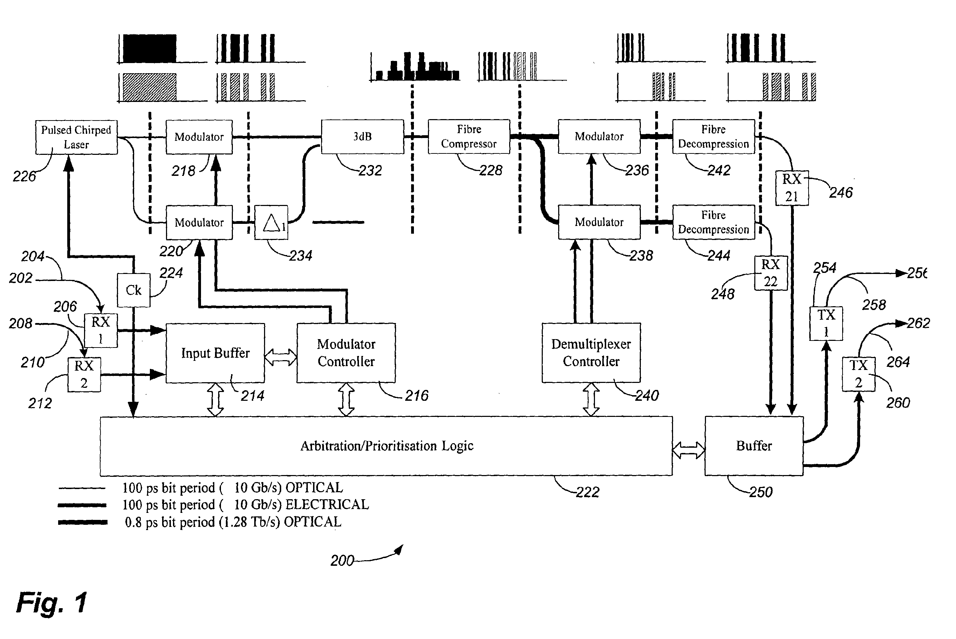

Referring to Figure 1, there is shown a router 200 comprising a plurality of input channels and a plurality of output channels is shown. Such a router is described in our co-pending British patent application no. 0009449.0. In the following example, however, only two input channels and two output channels of the router 200 will be described for the purposes of simplicity of description and hence clarity.

The router 200 has a first input channel 202 comprising a first input optical fibre 204 coupled to an input terminal of a first input receiver transducer 206. Similarly, the router 200 also has a second input channel 208 comprising a second input optical fibre 210 coupled to a second input receiver transducer 212. Both the first and second input receiver transducers 206, 212 are coupled to an input buffer 214 by a 10Gb/s electrical connection. The input buffer 214 is coupled to a modulator controller 216 by means of an electrical data bus, the modulator controller 216 being coupled to a first modulator 218 and a second modulator 220 by respective 10Gb/s electrical connections. Both the input buffer 214 and the modulator controller 216 are coupled to an arbitration/prioritisation logic unit 222. A clock unit 224 is coupled to the arbitration/prioritisation logic unit 222 by a 10Gb/s electrical connection, the clock unit 224 also being connected to a pulsed chirped laser 226 by a 10Gb/s electrical connection. The pulsed chirped laser 226 is coupled to the first modulator 218 and the second modulator 220 by means of a fibre-optic splitter and a 10Gb/s optical connection.

The first modulator 218 is coupled to a 3dB coupler 232 by a 10Gb/s optical connection. The second modulator 218 is coupled to a delay unit 234, for example a predetermined length of optical fibre, by a 10Gb/s optical connection, the delay unit 234 being coupled to the 3dB coupler 232 by a 10Gb/s optical connection. The 3dB coupler 232 is coupled to a fibre compressor 228 by means of a 1.28Tb/s optical connection. The fibre compressors 228 is a transmission medium, for example an optical fibre with controlled dispersion characteristics, where the velocity of propagation through the fibre compressor 228, is linearly dependent upon the frequency of the electromagnetic radiation propagating therethrough. A first output terminal of the fibre compressor 228 is coupled to a first output modulator 236, and a second output terminal of the fibre compressor 228 is coupled to a second output modulator 238, both by respective 1.28Tb/s optical connections. The first output modulator 236 and the second output modulator 238 are both coupled to a demultiplexer controller 240 by a 10Gb/s electrical connection, the demultiplexer controller 240 being coupled to the arbitration/prioritisation logic unit 222 by an electrical data bus.

The first and second output modulators 236, 238 and the demultiplexer controller 240 operate together to select compressed packets that are destined for output channels to which the first and second output modulator 236, 238 correspond. Typically, the selection is implemented by setting the modulator 236, 238 to an 'off' state. In the 'off' state the modulator 236, 238 (attenuates) an input signal. When a packet destined for a particular output channel is due to exit the coupler 232 (taking account of any delay in the optical fibre between the coupler 232 and the modulator 236, 238) the modulator 236, 238 corresponding to the particular output channel is set to an 'on' state and the compressed packet is passed through the modulator 236, 238 corresponding to the output channel for which the compressed packet is destined. The modulator 236, 238 can also operate so as to divert the required compressed packet (rather than to attenuate the packet).

The first output modulator 236 is coupled to a fibre decompressor 242 by a 1.28Tb/s optical connection. The second output modulator 238 is coupled to a second fibre decompressor 244 by a 1.28Tb/s optical connection. The first fibre decompressor 242 is coupled to a first output receiver transducer 246 and the second fibre decompressor 244 is coupled to a second output receiver transducer 248, both by a 10Gb/s optical connection. The first and second output receiver transducer 246, 248 are both coupled to an output buffer 250 by a 10Gb/s electrical connection, the output buffer 250 being coupled to the arbitration/prioritisation logic unit 222 by an electrical data bus.

A first output terminal of the buffer 250 is coupled to a first output transmitter transducer 254 for onward transmission of data on a first output channel 256 by means of a first output optical fibre 258. Similarly, a second output terminal of the buffer 250 is coupled to a second output transmitter transducer 260 for onward transmission of data on the second output channel 262 by means of a second output optical fibre 264.

Although the router illustrated has only two input/output ports (termed line interfaces), there would be between 16 and 128 such ports in a typical router. Hence the optical components in the form of modulators (218, 220, 236 and 238), delay elements (234), fibre compressors (228) and fibre decompressors (242 and 244) occupy a considerable amount of volume. The components must be interconnected using optical fibre as discussed above.

One of the established processes for integrating optical components is known as silica on silicon. In this approach, a silica layer is attached to the surface of a silicon integrated circuit. The silica layer can have optical waveguides fabricated in it. The silicon integrated circuit can then be used to influence the properties of the optical waveguide. For example, the attenuation of part of the waveguide can be controlled to form a switch or a modulator. Alternatively, the refractive index of the waveguide can be modified locally to form a variable delay.

The device in accordance with the invention could be fabricated in other planar waveguide technologies where the waveguides are made in materials such as Indium Phosphide, Lithium Niobate or other materials.

There are a number of mechanisms for changing the refractive index of the waveguide. These include the electro-optic effect and most commonly the thermo-optic effect. Both of these effects can be used to locally change the resonant wavelength of a grating formed in the waveguide. This effect can be used to correct the manufacturing errors in such a grating.

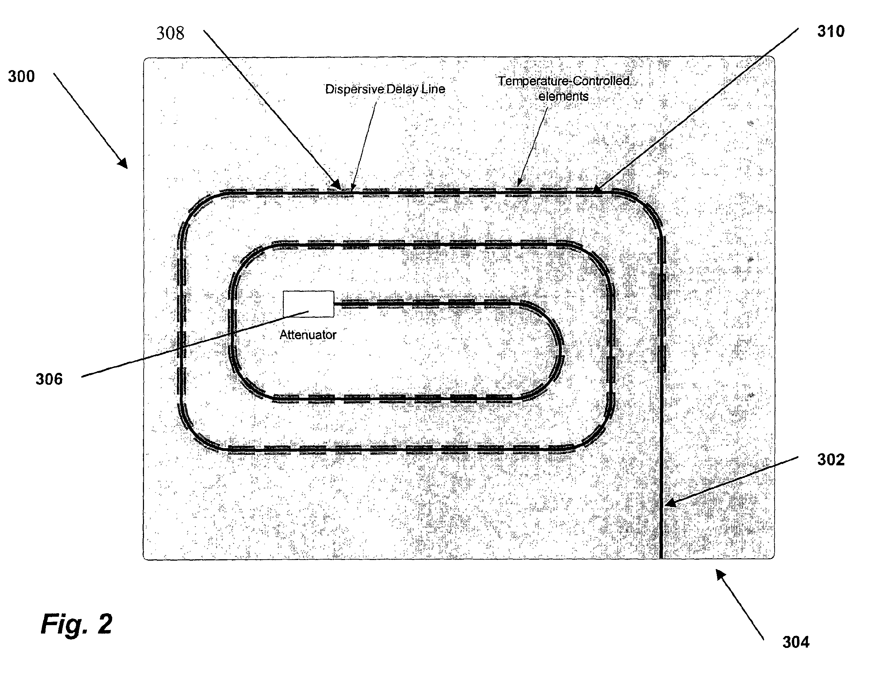

Such a grating is illustrated in Figure 2. An optical integrated device 300 with dimensions of 25mm by 20mm is shown. An optical waveguide 302 is shown as solid line starting from a lower edge 304 on the device 300 and then spiralling towards the centre thereof. The waveguide 302 is terminated with an attenuator 306 and has a dispersive delay line 308 as shown. The dispersive delay line 308 comprises blocks 310 under the waveguide 302. The blocks 310 are the elements in a silicon integrated circuit that control (in this example thermally) the properties of the waveguide 302. The Bragg dispersive grating is fabricated in the portion of the waveguide 302 above these elements.

The control elements 310 could be resistive, heating elements fabricated in the silicon under the waveguide 302. The current passing through each element could then be controlled by part of the integrated circuit adjacent to the heating clement. In order to correct for manufacturing defects in the grating or to alter the grating properties (for example, to change the rate of dispersion), the current in each element would need to be adjusted and maintained at a set value. In practice, this would require the grating properties to be measured and current changed until the optimum grating performance is obtained.

The current in heating elements could be controlled using conventional, electronic, digital to analogue converter (DAC) techniques. This could involve a DAC for each element or a single DAC could be used to generate a voltage that is distributed using a charge-coupled device. In the later case, the current level would be stored as charge on a capacitor that would be refreshed periodically. The charge for each element would be set by a single DAC and the charge-coupled device used to distribute the values for each element. The choice of a multiple DACs or a single DAC and a charge-coupled device will be determined by a trade-off between performance and manufacturing costs.

This technique could also be applied to modification and control of other devices that may be fabricated on an integrated optical device. These include arrayed waveguide gratings.

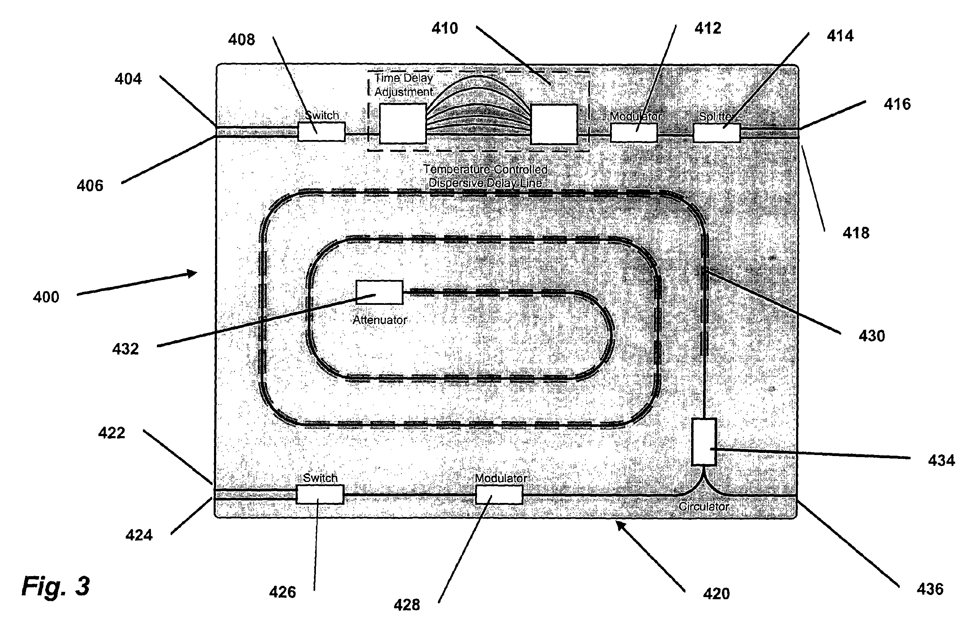

An integrated optical device 400 with all the optical backplane components associated with a single input/output port on router is illustrated in Figure 3. This shows an input part 402 of a line interface at the top of the device 400. The input part 402 consists of two input waveguides 404, 406 (on the left) carrying redundant chirped optical pulses that are selected by a switch 408. The selected optical pulse is then passed to a time delay adjustment element 410 in which the time delay can he adjusted by choosing a path with the appropriate delay from the array of different paths illustrated. The pulse is then modulated using a modulator 412 and the modulated pulse is then passed to a power splitter 414 where it is power split in two to give two redundant versions 416, 418 of the modulated chirped pulse.

Below these components are the backplane optical elements associated with the data output 420. Two redundant streams of compressed pulses 422, 424 enter from the left-hand side. The required stream is selected by a switch 426 and then passed to a modulator 428 which is used to select the required compressed pulse for application to a Bragg dispersive grating 430 including an attenuator 432 via a circulator 434. The decompressed pulse then exits the device 400 at 436 on the right-hand side.

Using this technique, all the optical backplane components could be integrated onto a single optical device. This would result in a considerable saving in volume and manufacturing costs.

Current commercially available circuits of this type do not provide for the silicon to have any functionality and instead the silicon is used purely as a substrate to support the silica layer. If such circuits are employed, the integrated circuit discussed above would be provided as a separate device which would be bonded to the surface of the silica layer. The integrated circuit would then be linked to elements that it is controlling by electrical tracks on the surface of the silica layer. Because the integrated circuit is bonded to a surface of the optical device, connection between the integrated circuit and the tracks can be carried out using standard integrated circuit techniques such as wire bonding. This would alleviate the need for specialist integrated circuit packaging to enable the required number of interconnections that would be needed between a separate integrated circuit package and the optical device. Such packaging is known to represent a significant proportion of the costs of such devices and it would therefore be advantageous to avoid the use of such packaging.

## Claims

1. A planar dispersion compensation waveguide comprising a Bragg grating and a plurality of control elements, the control elements each being operable to adjust the refractive index of a section of the grating and control means, wherein the control means are operable to adjust the chirp properties of the waveguide.

2. An integrated optical device comprising:-
a plurality of elctronic components;
a waveguide; and
a Bragg grating formed in the waveguide;
wherein the Bragg grating comprises a plurality of control elements, the control elements each being operable to adjust the refractive index of a section of the grating and control means, wherein the control means are operable to adjust the chirp properties of the waveguide.

3. A waveguide according to claim 1 or 2, wherein the control elements are selected from the group comprising: thermo-optic elements; electro-optic elements; magneto-optic elements; magneto-optic-non- \magneto- \strictive elements; piezo-electric elements.

4. A waveguide according to any one of claims 1 or 2, wherein the control elements are located over the waveguide.

5. A waveguide according to any one of claims 1 or 2, wherein the control elements are located under the waveguide.

6. A waveguide according to any one of claims 1 or 2, wherein the control elements are located in the waveguide.

7. A waveguide according to any one of the preceding claims, further including an attenuator connected to the waveguide.

8. A waveguide according to any one of the preceding claims wherein the Bragg grating is non-linear.

9. A device according to claim 2, the device comprising an input path and an output path, the waveguide and Bragg grating being formed in the output path.

10. A device according to claim 2, wherein said plurality of optical components includes first modulator means and time-delay adjustment means in the input path.

11. A device according to claim 2 or 10, wherein said plurality of optical components further includes first switch means in the input path for selecting one of a plurality of input signals.

12. A device according to any one of claims 2, 10 or 11, wherein said plurality of electronic components further includes splitter means.

13. An optical backplane including an integrated optical device according to any one of claims 2 and 9 to 12.

14. A method of operating a planar dispersion compensation waveguide comprising a Bragg grating and a plurality of control elements, the control elements each being operable to adjust the refractive index of a section of the grating and control means; the method comprising the steps of adjusting the refractive index of each of the sections of the grating whereby to adjust the chirp properties of the waveguide.

15. An optical waveguide device according to claim 2 wherein control of the control elements is carried out by an electronic circuit that is part of the substrate of the optical waveguide device; wherein this integrated circuit is operable to control the individual voltage/current supplied to each element

16. A device according to claim 2 or 15 wherein control of the control elements is carried out by an electronic integrated circuit that is bonded to the surface of the optical waveguide device where this integrated circuit is able to control the individual voltage/current supplied to each element.

17. A device as claimed in 15 or 16 above wherein the control currents or voltages are stored on the integrated circuit and can be programmed by signals from an external system.
